# EUROPEAN PATENT APPLICATION

(11) **EP 4 567 660 A2**
(43) Date of publication of application: **11.06.2025**
(21) Application number: 25154791.5
(22) Date of filing: 29.01.2025
(51) Int. Cl.: G06F 40/174, G06F 40/216, G06F 40/30, G06F 40/35, G06F 40/44, G06F 40/56, G06T 11/60

(54) **METHOD, APPARATUS, ELECTRONIC DEVICE, AND STORAGE MEDIUM FOR MODEL INSTRUCTION PROCESSING**

(30) Priority: 01.03.2024 CN 202410239278
(71) Applicant: Beijing Zitiao Network Technology Co., Ltd., 100190 Beijing (DE)
(72) Inventor: Zhu, Xiaoshu, Beijing, 100028 (CN)
(74) Representative: Isarpatent

(57) **Abstract**

A method, an apparatus, an electronic device, and a storage medium for model instruction processing are provided. The method for model instruction processing includes: acquiring (S110) an initial instruction input by a user; generating (S120) a first display interface based on the initial instruction, initial content corresponding to at least one field in the first display interface being determined based on the initial instruction; and determining (S130) a first instruction for inputting into a first target model based on a field currently displayed in the first display interface and content corresponding to the field.

## Description

### FIELD

The present disclosure relates to the field of computer technology and, in particular, to a method, an apparatus, an electronic device, and a storage medium for model instruction processing.

### BACKGROUND

Generative artificial intelligence can generate relevant content (such as a text or an image) based on an instruction (such as a prompt) input by a user. The quality of the relevant content (for example, whether the relevant content meets the expectations of the user) is related to the perfection degree of the instruction input into the model.

### SUMMARY

This Summary section is provided to introduce concepts in a brief form, which will be described in detail in the following Detailed Description section. This Summary section is not intended to identify key features or essential features of the claimed technical solution, nor is it intended to be used to limit the scope of the claimed technical solution.

In a first aspect, according to one or more embodiments of the present disclosure, a method for model instruction processing is provided, including:
acquiring an initial instruction input by a user;
generating a first display interface based on the initial instruction, and initial content corresponding to at least one field in the first display interface is determined based on the initial instruction; and
determining a first instruction for inputting into a first target model based on a field currently displayed in the first display interface and content corresponding to the field.

In a second aspect, according to one or more embodiments of the present disclosure, an apparatus for model instruction processing is provided, including:
an obtaining unit, configured to acquire an initial instruction input by a user;
a generation unit, configured to generate a first display interface based on the initial instruction, and initial content corresponding to at least one field in the first display interface is determined based on the initial instruction; and
a determination unit, configured to determine a first instruction for inputting into a first target model based on a field currently displayed in the first display interface and content corresponding to the field.

In a third aspect, according to one or more embodiments of the present disclosure, an electronic device is provided, including: at least one memory and at least one processor; where the memory is configured to store program code, and the processor is configured to perform the program code stored in the memory to cause the electronic device to perform the method provided according to one or more embodiments of the present disclosure.

In a fourth aspect, according to one or more embodiments of the present disclosure, a non-transitory computer storage medium is provided, the non-transitory computer storage medium stores program code, the program code, when executed by a computer device, causes the computer device to perform the method provided according to one or more embodiments of the present disclosure.

According to one or more embodiments of the present disclosure, the initial instruction input by the user is acquired, the first display interface is generated based on the initial instruction, the initial content corresponding to the at least one field in the first display interface is determined based on the initial instruction, and the first instruction for inputting into the first target model is determined based on the field currently displayed in the first display interface and the content corresponding to the field.

### BRIEF DESCRIPTION OF THE DRAWINGS

The above and other features, advantages, and aspects of embodiments of the present disclosure will become more apparent when taken in conjunction with the drawings and with reference to the following detailed description. Throughout the drawings, the same or similar reference numerals refer to the same or similar elements. It should be understood that the drawings are schematic and that the components and elements are not necessarily drawn to scale.
FIG. 1 is a flowchart of a method for model instruction processing according to an embodiment of the present disclosure;
FIG. 2 is a schematic diagram of a first display interface according to an embodiment of the present disclosure;
FIG. 3 is a schematic diagram of an apparatus for model instruction processing according to an embodiment of the present disclosure; and
FIG. 4 is a structural diagram of an electronic device according to an embodiment of the present disclosure.

### DETAILED DESCRIPTION OF EMBODIMENTS

Embodiments of the present disclosure are described in more detail below with reference to the drawings. Although some embodiments of the present disclosure are shown in the drawings, it should be understood that the present disclosure may be implemented in various forms and should not be construed as being limited to the embodiments set forth herein. On the contrary, these embodiments are provided for a more thorough and complete understanding of the present disclosure. It should be understood that the drawings and the embodiments of the present disclosure are only for illustrative purposes and are not intended to limit the scope of protection of the present disclosure.

It should be understood that the steps described in the implementations of the present disclosure may be performed in different orders and/or in parallel. In addition, the implementations may include additional steps and/or omit performing the illustrated steps. The scope of the present disclosure is not limited in this respect.

As used herein, the term "include/include" and its variants are open-ended inclusions, that is, "include/include but not limited to". The term "based on" is "at least partially based on". The term "an embodiment" means "at least one embodiment"; the term "another embodiment" means "at least one other embodiment"; and the term "some embodiments" means "at least some embodiments". The term "in response to" and related terms mean that a signal or an event is affected by another signal or event to a certain extent, but is not necessarily completely or directly affected. If event x occurs "in response to" event y, then x may be directly or indirectly responsive to y. For example, the occurrence of y may ultimately lead to the occurrence of x, but there may be other intermediate events and/or conditions. In other cases, y may not necessarily lead to the occurrence of x, and x may occur even if y has not occurred. Furthermore, the term "in response to" may also mean "at least partially in response to".

The term "determine" widely encompasses a variety of actions, which may include acquiring, calculating, computing, processing, deriving, researching, searching (for example, searching in a table, a database, or other data structures), finding, and similar actions, and may also include receiving (for example, receiving information), accessing (for example, accessing data in a memory), and similar actions, as well as parsing, selecting, choosing, establishing, and similar actions, and so on. Related definitions of other terms will be given in the description below. Related definitions of other terms will be given in the description below.

It should be understood that data (including but not limited to the data itself, the acquisition or use of data) involved in the technical solution should comply with relevant laws and regulations.

It should be understood that before using the technical solutions disclosed in the embodiments of the present disclosure, the user should be informed of the type, scope of use, use scenarios, and the like of the personal information involved in the present disclosure in an appropriate manner in accordance with relevant laws and regulations, and the user's authorization should be obtained. For example, in response to receiving an active request from the user, prompt information is sent to the user, so as to explicitly inform the user that the operation requested to be performed will require the acquisition and use of the user's personal information, so that the user may independently choose whether to provide personal information to software or hardware such as an electronic device, an application, a server, or a storage medium that performs the operations of the technical solution of the present disclosure.

As an alternative but non-limiting implementation, the manner of sending the prompt information to the user in response to receiving the user's active request, for example, may be in the form of a pop-up window, and the prompt information may be presented in the pop-up window in text. In addition, the pop-up window may also carry a selection control for the user to choose whether to "agree" or "disagree" to provide personal information to the electronic device.

It should be understood that an image generated according to the method provided in the embodiments of the present disclosure should be processed in accordance with relevant laws and regulations. For example, technical measures are taken to add an identifier that does not affect the user's use according to the provisions, or a conspicuous identification is provided in a reasonable position or area according to the provisions, to prompt the public of the situation of deep synthesis.

It should be understood that the above process of notifying and obtaining the user's authorization, and the processing of the image are only illustrative and do not constitute a limitation on the implementations of the present disclosure. Other manners that meet relevant laws and regulations may also be applied to the implementations of the present disclosure.

It should be noted that concepts such as "first" and "second" mentioned in the present disclosure are only used to distinguish between apparatuses, modules, or units, and are not used to limit the order of functions performed by these apparatuses, modules, or units or their interdependence.

It should be noted that the modifiers "a" and "a plurality of" mentioned in the present disclosure are illustrative rather than restrictive, and those skilled in the art should understand that unless otherwise explicitly indicated in the context, they should be understood as "one or more".

For the purposes of the present disclosure, the phrase "A and/or B" means (A), (B), or (A and B).

The names of messages or information exchanged between multiple apparatuses in the implementations of the present disclosure are only for illustrative purposes and are not intended to limit the scope of these messages or information.

It is often difficult for an unskilled user to construct an appropriate instruction, and even for a skilled user, it takes a significant amount of time and effort to write a comprehensive and appropriate instruction.

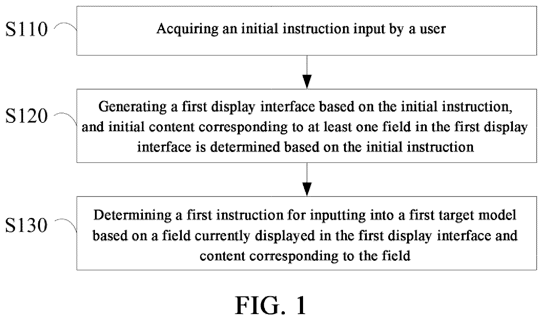

Referring to FIG. 1, it shows a flowchart of a model instruction processing method 100 according to an embodiment of the present disclosure. The method 100 includes step S110 to step S130.

Step S110: acquiring an initial instruction input by a user.

In an alternative implementation, the initial instruction includes an instruction for instructing the first target model to generate a text. The first target model may include a language model, such as a Transformer-based model, an auto encoder-based model, a sequence-to-sequence model, a recurrent neural network model, or a hierarchical model, but the present disclosure is not limited in this respect. In a specific implementation, the first target model may be a large model for natural language processing. In an actual application scenario, the initial instruction may be "write an article/composition/report about xx".

In another alternative implementation, the initial instruction includes an instruction for instructing the first target model to generate an image. The first target model may include a diffusion model, a generative adversarial network, a diffusion model, and an autoregressive model, but the present disclosure is not limited in this respect. Exemplarily, the initial instruction may be "generate a photo/painting about xx".

In some embodiments, the initial instruction input by the user may be received via an edit box control in a client, and the edit box control may be associated with the first target model. For example, the edit box control is used to receive an instruction input by the user to the first target model.

Step S120: generating a first display interface based on the initial instruction, and initial content corresponding to at least one field in the first display interface is determined based on the initial instruction.

The field is used to describe the feature or attribute of the object. For example, in the application scenario of text generation (for example, the initial instruction is used to instruct the model to generate a text), the field may include but not limited to a literary form (for example, argumentative, prose, diary, novel, news) of the to-be-generated text, an audience (for example, consumers, young people, work partners), a style (popular, critical, academic, humorous), a rhythm (fierce, gentle), or content points, etc.; and in the application scenario of image generation (for example, the initial instruction is used to instruct the model to generate a picture), the field may include but not limited to a theme (for example, people, animals, places, objects, etc.) of the to-be-generated text image, a form (for example, photo, painting, graffiti, sculpture, etc.), a painting type (for example, cartoon, ink painting, oil painting, sketch, stick figure, print, sand painting, etc.), an environment (for example, indoor, outdoor, grassland, forest, etc.), light (for example, bright, dark, soft, neon), a style, a color, an emotion, a composition, etc.

In some embodiments, a second instruction for inputting into a second target model may be determined based on the initial instruction, the second instruction may be input into the second target model to obtain a second output, and the initial content corresponding to the at least one field (such as an initial value of the field) may be determined based on the second output.

In some embodiments, the second instruction is used to instruct the second target model to generate a generation suggestion of a generation object corresponding to the initial instruction, such as a writing suggestion, a chat suggestion, or the like. Exemplarily, if the initial instruction is "write an article about xx", the second instruction for inputting into the second target model may be "how to write an article about xx", "please give suggestions/writing points for writing an article about xx", or "if an article about xx is to be written, what literary form/style/rhythm should be used, and what materials should be cited", etc., but the present disclosure is not limited thereto. In some embodiments, the second instruction may be constructed based on a preset sentence and the initial instruction.

In some embodiments, the second target model may include a language model, such as a Transformer-based model, an auto encoder-based model, a sequence-to-sequence model, a recurrent neural network model, or a hierarchical model, but the present disclosure is not limited thereto. Exemplarily, the second target model may be a large model for natural language processing, which may generate a natural language text, and may also understand the meaning of the text in depth, and handle various natural language tasks, such as text summarization, question answering, translation, etc.

In this way, the initial value of the field in the first display interface may be determined based on the output of the second target model (for example, the writing suggestion), so as to assist in expanding the initial instruction input by the user.

It should be noted that in the application scenario of text generation, the second target model and the first target model may be the same model or the same type of model, or the second target model may be a different model from the first target model. For example, the second target model may be an additionally provided model dedicated to instruction expansion, and the present disclosure is not limited in this respect.

Step S130: determining a first instruction for inputting into a first target model based on a field currently displayed in the first display interface and content corresponding to the field.

In some embodiments, the first instruction is generated based on the initial instruction and the field currently displayed in the first display interface and the content corresponding to the field. In this way, the first instruction includes not only a part that reflects the initial instruction, but also a part that reflects the field (and its content). Exemplarily, the initial instruction may be expanded in a preset format based on the field currently displayed in the first display interface and the content corresponding to the field to obtain the first instruction. For example, the first instruction may be "write an article about xx, including the following points: a literary form of argumentative, an audience of consumers, a style of critical, a rhythm of fierce, and... should be cited in the article".

According to one or more embodiments of the present disclosure, the initial instruction input by the user is acquired, the first display interface is generated based on the initial instruction, the initial content corresponding to the at least one field in the first display interface is determined based on the initial instruction, and the first instruction for inputting into the first target model is determined based on the field currently displayed in the first display interface and the content corresponding to the field, so that the initial instruction input by the user may be automatically rewritten, to make the final first instruction for inputting into the first target model more complete.

In some embodiments, before step S130 is performed, the user may edit the content of the field displayed in the first display interface, for example, modify the content corresponding to the field, delete the field and the content corresponding to the field, or add a field and content corresponding to the field.

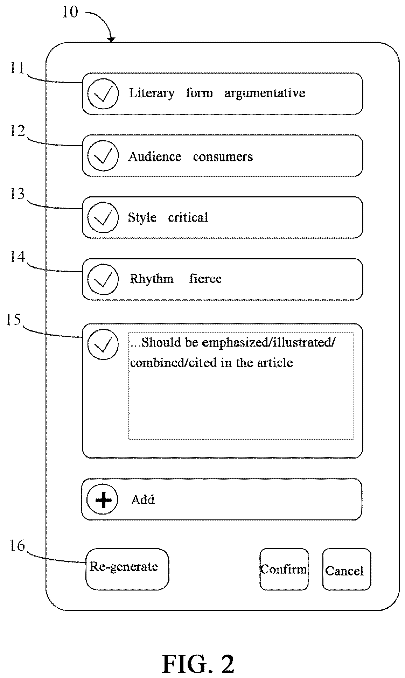

Referring to FIG. 2, the first display interface 10 displays a "literary form" field 11, an "audience" field 12, a "style" field 13, a "rhythm" field 14, and a "writing point" field 15. These fields and their corresponding content constitute writing suggestions provided to the user. These writing suggestions are subsequently used to further expand the initial instruction previously input by the user, so that the final instruction (that is, the first instruction) input to the first target model to generate the article is more complete. In some embodiments, the user may further modify the writing suggestions displayed in the first display interface to better meet his/her own expectations. For example, the initial content corresponding to each field may be modified (for example, "critical" under the "style" field 13 is changed to "humorous"), one or more of the fields 11-15 may be deleted (for example, a certain field is unchecked), a new field may be independently added, and the like. In some embodiments, the user may also instruct to regenerate some or all of the fields and their content (for example, the trigger control 16).

In some embodiments, after the first instruction is obtained, the first instruction is input into the first target model to obtain a first target output. According to one or more embodiments of the present disclosure, after the user inputs the initial instruction and before the first target model formally outputs relevant content (for example, a text or an image) based on the instruction, a suggestion of an improving instruction (field and its content) is given through the first display interface based on the initial instruction, and the improved instruction (that is, the first instruction) is input into the first target model for formal content generation (that is, the first target output).

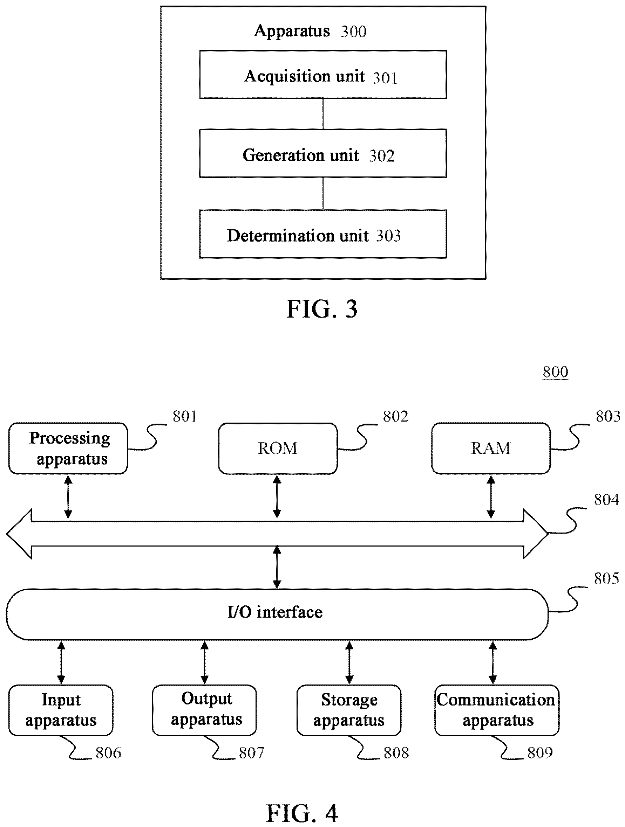

Correspondingly, referring to FIG. 3, according to an embodiment of the present disclosure, an apparatus 300 for model instruction processing is provided, including:
an obtaining unit 301, configured to acquire an initial instruction input by a user;
a generation unit 302, configured to generate a first display interface based on the initial instruction, and initial content corresponding to at least one field in the first display interface is determined based on the initial instruction; and
a determination unit 303, configured to determine a first instruction for inputting into a first target model based on a field currently displayed in the first display interface and content corresponding to the field.

In some embodiments, the generation unit includes:
a second instruction determination unit, configured to determine a second instruction for inputting into a second target model based on the initial instruction;
a second model input unit, configured to input the second instruction into the second target model to obtain a second output; and
an initial content determination unit, configured to determine the initial content corresponding to the least one field based on the second output.

In some embodiments, the initial instruction includes an instruction for instructing the first target model to generate a text; and the at least one field includes one or more of the following: a theme, a literary form, an audience, a style, a rhythm, and content points.

In some embodiments, the initial instruction includes an instruction for instructing the first target model to generate an image; and the at least one field includes one or more of the following: a theme, a form, a painting type, an environment, light, a style, a color, an emotion, and a composition.

In some embodiments, the first target model includes a language model; and the apparatus for model instruction processing further includes:

a second model input unit, configured to input the first instruction into the first target model to obtain a first target output.

In some embodiments, the apparatus for model instruction processing further includes:
an update unit, configured to: in response to an edit operation of the user on the field in the first display interface, update the field displayed in the first display interface or content corresponding to the field; the edit operation including at least one of: modifying the content corresponding to the field, deleting the field and the content corresponding to the field, or adding a field and content corresponding to the field.

According to one or more embodiments of the present disclosure, the second target model includes a language model.

For the embodiments of the apparatus, since they basically correspond to the method embodiments, reference may be made to the descriptions of the method embodiments for related parts. The above-described apparatus embodiments are only schematic, and the modules described as separate modules may be separate or not. Some or all of the modules may be selected according to actual needs to achieve the purpose of the technical solution of the present embodiments. Those of ordinary skill in the art may understand and implement the present embodiments without paying creative labor.

Correspondingly, according to one or more embodiments of the present disclosure, an electronic device is provided, including:
at least one memory and at least one processor;
wherein the memory is used to store program code, and the processor is used to call the program code stored in the memory to cause the electronic device to perform the method for model instruction processing provided according to one or more embodiments of the present disclosure.

Correspondingly, according to one or more embodiments of the present disclosure, a non-transitory computer storage medium is provided, the non-transitory computer storage medium stores program code, and the program code may be executed by a computer device to cause the computer device to perform the model instruction processing method provided according to one or more embodiments of the present disclosure.

Reference is made to FIG. 4 below, which illustrates a structural diagram of an electronic device 800 (such as a terminal device or a server) suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), and a vehicle-mounted terminal (such as a vehicle-mounted navigation terminal), and a fixed terminal such as a digital TV and a desktop computer. The electronic device shown in FIG. 4 is only an example, and should not bring any limitation to the function and scope of use of the embodiments of the present disclosure.

As shown in FIG. 4, the electronic device 800 may include a processing apparatus (such as a central processing unit, a graphics processing unit, etc.) 801 that may perform various appropriate actions and processing according to a program stored in a read-only memory (ROM) 802 or a program loaded from a storage apparatus 808 into a random access memory (RAM) 803. The RAM 803 also stores various programs and data required for the operation of the electronic device 800. The processing apparatus 801, the ROM 802, and the RAM 803 are connected to each other through a bus 804. An input/output (I/O) interface 805 is also connected to the bus 804.

Generally, the following apparatuses may be connected to the I/O interface 805: an input apparatus 806 including, for example, a touch screen, a touchpad, a keyboard, a mouse, a camera, a microphone, an accelerometer, a gyroscope, etc.; an output apparatus 807 including, for example, a liquid crystal display (LCD), a speaker, a vibrator, etc.; a storage apparatus 808 including, for example, a magnetic tape, a hard disk, etc.; and a communication apparatus 809. The communication apparatus 809 may allow the electronic device 800 to perform wireless or wired communication with other devices to exchange data. Although FIG. 4 shows the electronic device 800 having various apparatuses, it should be understood that it is not required to implement or have all the illustrated apparatuses. More or fewer apparatuses may alternatively be implemented or provided.

In particular, according to the embodiments of the present disclosure, the processes described above with reference to the flowcharts may be implemented as computer software programs. For example, an embodiment of the present disclosure includes a computer program product, which includes a computer program carried on a computer-readable medium. The computer program includes program code for executing the method shown in the flowchart. In such an embodiment, the computer program may be downloaded and installed from a network through the communication apparatus 809, or installed from the storage apparatus 808, or installed from the ROM 802. When the computer program is executed by the processing apparatus 801, the above functions defined in the method of the embodiment of the present disclosure are performed.

It should be noted that the above computer-readable medium of the present disclosure may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device,, a magnetic magnetic storage device, or any suitable combination thereof. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated in a baseband or as a part of a carrier, in which a computer-readable program code is carried. This propagated data signal may take many forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program for use by or in combination with an instruction execution system, apparatus, or device. The program code contained on the computer-readable medium may be transmitted by any suitable medium, including but not limited to: wire, optical cable, RF (Radio Frequency), etc., or any suitable combination thereof.

In some implementations, the client and the server may communicate using any currently known or future developed network protocol such as HTTP (HyperText Transfer Protocol), and may interconnect with digital data communication (for example, communication network) in any form or medium. Examples of the communication network include a local area network ("LAN"), a wide area network ("WAN"), an internetwork (for example, the Internet), and a peer-to-peer network (for example, an ad hoc peer-to-peer network), as well as any currently known or future developed network.

The above computer-readable medium may be included in the above electronic device, or may exist alone without being assembled into the electronic device.

The above computer-readable medium carries one or more programs, and when the one or more programs are executed by the electronic device, the electronic device is caused to perform the above method of the present disclosure.

The computer program code for performing the operations of the present disclosure may be written in one or more programming languages or a combination thereof. The above programming languages include object-oriented programming languages such as Java, Smalltalk, C++, and also include conventional procedural programming languages such as "C" language or similar programming languages. The program code may be executed entirely on the user's computer, partly on the user's computer, as a stand-alone software package, partly on the user's computer and partly on a remote computer, or entirely on the remote computer or server. In the case of a remote computer, the remote computer may be connected to the user's computer through any kind of network, including a local area network (LAN) or a wide area network (WAN), or may be connected to an external computer (for example, through the Internet using an Internet service provider).

The flowcharts and block diagrams in the drawings illustrate possible architectures, functions, and operations of the system, method, and computer program product according to various embodiments of the present disclosure. In this regard, each block in the flowchart or block diagram may represent a module, a program segment, or a part of code, and the module, the program segment, or the part of code contains one or more executable instructions for implementing a specified logical function. It should also be noted that in some alternative implementations, the functions marked in the blocks may also occur in a different order than the order marked in the drawings. For example, two blocks shown in succession may actually be executed substantially in parallel, and they may sometimes be executed in a reverse order, depending on the functions involved. It should also be noted that each block in the block diagram and/or flowchart, and a combination of blocks in the block diagram and/or flowchart, may be implemented with a dedicated hardware-based system that performs specified functions or operations, or may be implemented with a combination of dedicated hardware and computer instructions.

The units involved in the embodiments of the present disclosure may be implemented in software or hardware. The name of a unit does not constitute a limitation on the unit itself in some cases.

The functions described herein above may be performed, at least partially, by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

According to one or more embodiments of the present disclosure, a method for model instruction processing is provided, including: acquiring an initial instruction input by a user; generating a first display interface based on the initial instruction, initial content corresponding to at least one field in the first display interface being determined based on the initial instruction; and determining a first instruction for inputting into a first target model based on a field currently displayed in the first display interface and content corresponding to the field.

According to one or more embodiments of the present disclosure, generating the first display interface based on the initial instruction includes: determining a second instruction for inputting into a second target model based on the initial instruction; inputting the second instruction into the second target model to obtain a second output; and determining the initial content corresponding to the least one field based on the second output.

According to one or more embodiments of the present disclosure, the initial instruction includes an instruction for instructing the first target model to generate a text; and the at least one field includes one or more of the following: a theme, a literary form, an audience, a style, a rhythm, and content points.

According to one or more embodiments of the present disclosure, the initial instruction includes an instruction for instructing the first target model to generate an image; and the at least one field includes one or more of the following: a theme, a form, a painting type, an environment, light, a style, a color, an emotion, and a composition.

According to one or more embodiments of the present disclosure, the first target model includes a language model; and the method further includes: inputting the first instruction into the first target model to obtain a first target output.

The method for model instruction processing provided according to one or more embodiments of the present disclosure further includes: in response to an edit operation of the user on the field in the first display interface, updating the field displayed in the first display interface or content corresponding to the field; the edit operation including at least one of: modifying the content corresponding to the field, deleting the field and the content corresponding to the field, or adding a field and content corresponding to the field.

According to one or more embodiments of the present disclosure, the second target model includes a language model.

According to one or more embodiments of the present disclosure, an apparatus for model instruction processing is provided, including: an obtaining unit, configured to acquire an initial instruction input by a user; a generation unit, configured to generate a first display interface based on the initial instruction, initial content corresponding to at least one field in the first display interface being determined based on the initial instruction; and a determination unit, configured to determine a first instruction for inputting into a first target model based on a field currently displayed in the first display interface and content corresponding to the field.

According to one or more embodiments of the present disclosure, an electronic device is provided, including: at least one memory and at least one processor; where the memory is configured to store program code, and the processor is configured to perform the program code stored in the memory to cause the electronic device to perform the model instruction processing method provided according to one or more embodiments of the present disclosure.

According to one or more embodiments of the present disclosure, a non-transitory computer storage medium is provided. The non-transitory computer storage medium stores program code, and the program code, when executed by a computer device, causes the computer device to perform the model instruction processing method provided according to one or more embodiments of the present disclosure.

The above description is only preferred embodiments of the present disclosure and the description of the applied technical principles. Those skilled in the art should understand that the disclosure scope involved in the present disclosure is not limited to the technical solutions formed by the specific combination of the above technical features, but also covers other technical solutions formed by any combination of the above technical features or their equivalent features without departing from the above disclosed concept. For example, a technical solution formed by replacing the above features with the technical features disclosed in the present disclosure (but not limited to) having similar functions.

In addition, although operations are depicted in a particular order, this should not be understood as requiring that the operations be performed in the specific order shown or in a sequential order. Under certain circumstances, multitasking and parallel processing may be advantageous. Similarly, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable subcombination.

Although the subject matter has been described in language specific to structural features and/or logical actions of the method, it should be understood that the subject matter defined in the appended claims is not necessarily limited to the specific features or actions described above. On the contrary, the specific features and actions described above are only example forms for implementing the claims.

## Claims

1. A method for model instruction processing, comprising:
acquiring (S110) an initial instruction input by a user;
generating (S120) a first display interface based on the initial instruction, wherein initial content corresponding to at least one field in the first display interface is determined based on the initial instruction; and
determining (S130) a first instruction for inputting into a first target model based on a field currently displayed in the first display interface and content corresponding to the field.

2. The method according to claim 1, wherein generating (S120) the first display interface based on the initial instruction comprises:
determining a second instruction for inputting into a second target model based on the initial instruction;
inputting the second instruction into the second target model to obtain a second output; and
determining the initial content corresponding to the least one field based on the second output.

3. The method according to claim 1, wherein
the initial instruction comprises an instruction for instructing the first target model to generate a text; and
the at least one field comprises one or more of the following: a theme, a literary form, audience, a style, a rhythm, and content points.

4. The method according to claim 1, wherein
the initial instruction comprises an instruction for instructing the first target model to generate an image; and
the at least one field comprises one or more of the following: a theme, a form, a painting type, an environment, light, a style, a color, an emotion, and a composition.

5. The method according to claim 1, wherein the first target model comprises a language model; and the method further comprises: inputting the first instruction into the first target model to obtain a first target output.

6. The method according to claim 1, further comprising:
in response to an edit operation of the user on the field in the first display interface, updating the field displayed in the first display interface or content corresponding to the field; the edit operation comprising at least one of: modifying the content corresponding to the field, deleting the field and the content corresponding to the field, or adding a field and content corresponding to the field.

7. The method according to claim 2, wherein the second target model comprises a language model.

8. An apparatus (300) for model instruction processing, comprising:
an obtaining unit (301), configured to acquire an initial instruction input by a user;
a generation unit (302), configured to generate a first display interface based on the initial instruction, wherein initial content corresponding to at least one field in the first display interface is determined based on the initial instruction; and
a determination unit (303), configured to determine a first instruction for inputting into a first target model based on a field currently displayed in the first display interface and content corresponding to the field.

9. An electronic device (800), comprising:
at least one memory and at least one processor;
wherein the memory is configured to store program code, and the processor is configured to perform the program code stored in the memory to cause the electronic device to:
acquire an initial instruction input by a user;
generate a first display interface based on the initial instruction, wherein initial content corresponding to at least one field in the first display interface is determined based on the initial instruction; and
determine a first instruction for inputting into a first target model based on a field currently displayed in the first display interface and content corresponding to the field.

10. The device according to claim 9, wherein the program code causing the processor to generate the first display interface based on the initial instruction comprises the program code causing the processor to:
determine a second instruction for inputting into a second target model based on the initial instruction;
input the second instruction into the second target model to obtain a second output; and
determine the initial content corresponding to the least one field based on the second output.

11. The device according to claim 9, wherein
the initial instruction comprises an instruction for instructing the first target model to generate a text; and
the at least one field comprises one or more of the following: a theme, a literary form, audience, a style, a rhythm, and content points.

12. The device according to claim 9 wherein
the initial instruction comprises an instruction for instructing the first target model to generate an image; and
the at least one field comprises one or more of the following: a theme, a form, a painting type, an environment, light, a style, a color, an emotion, and a composition.

13. The device according to claim 9, wherein the first target model comprises a language model; and the program code further comprises the program code causing the processor to: input the first instruction into the first target model to obtain a first target output.

14. The device according to claim 9, the program code further comprises the program code causing the processor to:
in response to an edit operation of the user on the field in the first display interface, update the field displayed in the first display interface or content corresponding to the field; the edit operation comprising at least one of: modifying the content corresponding to the field, deleting the field and the content corresponding to the field, or adding a field and content corresponding to the field.

15. A non-transitory computer storage medium, wherein
the non-transitory computer storage medium stores program code, and the program code, when executed by a computer device, causes the computer device to perform the method according to any of claims 1 to 7.
